Europäisches Patentamt

European Patent Office

Office européen des brevets

(19)

(11) Numéro de publication : **0 080 386**
**B1**

(12) **FASCICULE DE BREVET EUROPÉEN**

(45) Date de publication du fascicule du brevet :
28.08.85

(21) Numéro de dépôt : 82401807.1

(22) Date de dépôt : 04.10.82

(51) Int. Cl.⁴ : **E 05 B 53/00, B 60 K 15/04**

(54) Dispositif de commande à distance d'un organe de verrouillage sur un véhicule automobile.

(30) Priorité : 23.11.81 FR 8121861

(43) Date de publication de la demande :
01.06.83 Bulletin 83/22

(45) Mention de la délivrance du brevet :
28.08.85 Bulletin 85/35

(84) Etats contractants désignés :
DE GB IT

(56) Documents cités :
US-A- 1 862 229

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Blanc, Roland**
**12 Rue de la Vaudoire**
**F-78500 Sartrouville (FR)**
Inventeur : **Guillard, Michel**
**3 Allée des Pépinières**
**F-78170 La Celle Saint Cloud (FR)**
Inventeur : **Le Narvor, Jean-Louis**
**Détroit Marine 21 Rue de la Digue**
**F-78600 Maisons Lafitte (FR)**

(74) Mandataire : **Moncheny, Michel et al**
**c/o Cabinet Lavoix 2 Place d'Estienne d'Orves**
**F-75441 Paris Cedex 09 (FR)**

## Description

L'invention se rapporte à un dispositif de commande à distance d'un organe de verrouillage sur un véhicule automobile. Elle s'applique notamment à un dispositif de commande par câble permettant de déverrouiller, de l'intérieur de l'habitacle, soit un bouchon de réservoir de carburant, soit une trappe d'accès à ce bouchon.

Le brevet US-A-1 861 229 décrit un tel agencement comprenant un organe d'actionnement de l'organe de verrouillage, placé sur le tableau de bord du véhicule et sollicité vers sa position de déverrouillage par un ressort. Un mécanisme commandé par une clé permet de bloquer cet organe d'actionnement et d'empêcher par conséquent le déverrouillage du bouchon de réservoir sans l'usage de cette clé.

L'invention a pour but d'apporter un élément supplémentaire de sécurité en interdisant la commande de déverrouillage si le frein de stationnement n'est pas serré tout en garantissant le rétablissement du verrouillage après l'opération de remplissage du réservoir.

L'invention concerne donc un dispositif de commande à distance d'un organe de verrouillage sur un véhicule automobile muni par ailleurs d'un organe de commande de frein de stationnement, comprenant un organe d'actionnement sollicité par un organe élastique, caractérisé en ce que ledit organe élastique sollicite l'organe d'actionnement dans le sens pour lequel l'organe de verrouillage est en position active et il est prévu des moyens pour maintenir ledit organe d'actionnement dans une position pour laquelle l'organe de verrouillage est rendu inactif, l'organe de commande du frein de stationnement agissant sur lesdits moyens pour les rendre inactifs lorsqu'il n'est pas en position de serrage du frein.

Suivant d'autres caractéristiques :
— lesdits moyens comprennent un organe élastique de retenue pouvant coopérer avec une partie de l'organe d'actionnement et maintenu écarté de cet organe d'actionnement lorsque l'organe de commande du frein de stationnement est en position desserrée ;
— l'organe d'actionnement est un levier articulé sur un support sur lequel est également articulé l'organe de commande du frein.

Un exemple de réalisation de l'invention fait l'objet de la description qui suit, en préférence aux dessins joints dans lesquels :

la figure 1 montre le dispositif en position verrouillée,

la figure 2 est une vue analogue, le dispositif étant en position déverrouillée.

Sur un plancher 1 de véhicule automobile est fixé un support 2 pour un levier 3 de frein de stationnement. Le levier 3 dont la section transversale présente la forme générale d'un U ouvert vers le bas, est articulé sur un axe 4 porté par un secteur cranté 5 situé entre les deux branches du U et rendu solidaire du support 2 par des pattes 5<sup>a</sup> et 5<sup>b</sup> et des boulons 6, 7. Cette disposition est parfaitement connue, le secteur cranté 5 faisant partie du système classique, non représenté, d'immobilisation du levier 3 dans sa position pour laquelle les freins du véhicule sont serrés.

Un dispositif de commande à distance comprend un levier 8 articulé sur un axe 9 porté par le support 2. Sur ce levier 8 est accrochée une extrémité d'un câble d'actionnement 10 dont l'autre extrémité est reliée, de façon connue, à un organe de verrouillage, non représenté, condamnant soit un bouchon de remplissage d'un réservoir de carburant, soit une trappe d'accès à ce bouchon.

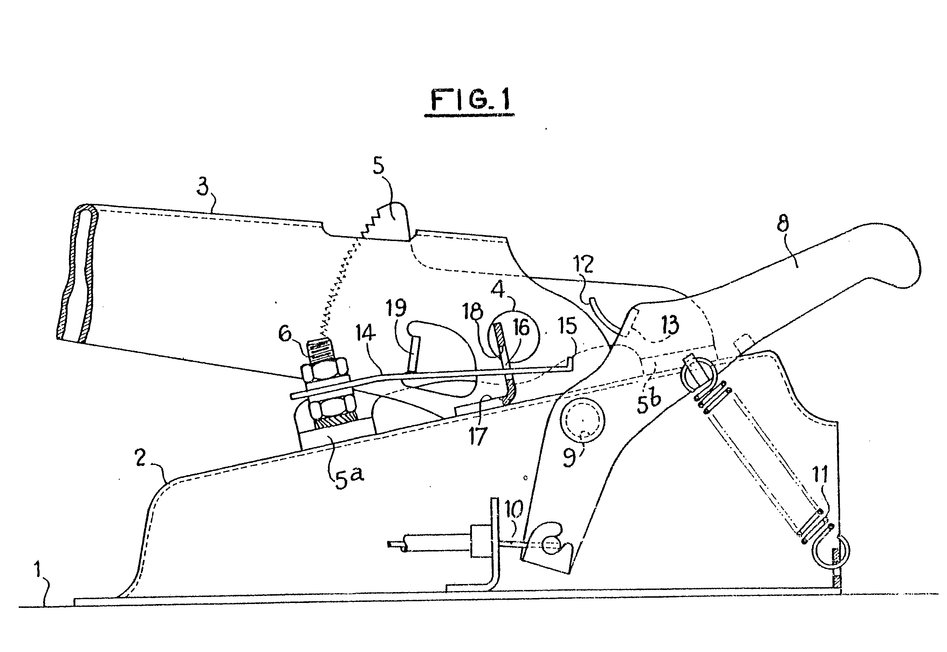

Un organe élastique constitué par un ressort de traction 11, accroché d'une part, sur le support 2 et, d'autre part, sur le levier 8, sollicite ce dernier dans le sens pour lequel l'organe de verrouillage est en position active, c'est-à-dire qu'il interdit l'ouverture du bouchon de remplissage du réservoir de carburant, ou de sa trappe d'accès (fig. 1).

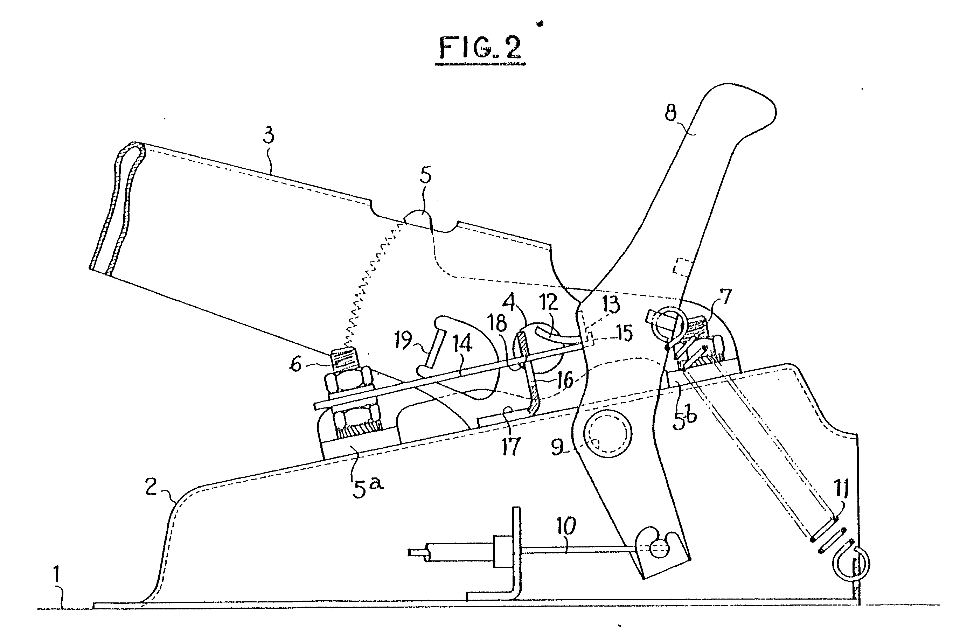

Le levier 8 porte une patte latérale formant une rampe 12 limitée par une arête 13. Une lame de ressort 14 fixée par une extrémité sur le support 2 au moyen du boulon 6, présente à son autre extrémité, un bord rabattu 15 susceptible de coopérer avec la rampe 12 et son arête 13. Cette lame de ressort traverse une lumière 16 ménagée dans une équerre 17 fixée sur le support 2, la lame étant normalement maintenue par son élasticité contre le côté supérieur 18 de la lumière (Fig. 2).

Le levier 3 de frein possède, sur son flanc latéral, un bord tombé 19 situé au-dessus de la lame de ressort 14 et qui repousse cette dernière vers le bas lorsque le frein de stationnement est desserré (Fig. 1).

Le fonctionnement du dispositif qui vient d'être décrit est le suivant :

Lorsque le frein de stationnement est desserré, le bord tombé 19 du levier 3 repousse la lame de ressort 14 vers le bas, comme représenté sur la Fig. 1. Le levier 8 de commande à distance, sollicité par le ressort 11 maintient l'organe de verrouillage en position active. Si le levier 8 est tiré à l'encontre de l'action du ressort 11, il ne peut se maintenir dans cette position tirée et il reprend sa position de verrouillage dès qu'il est relâché. L'utilisateur ne peut donc pas ouvrir la trappe ou le bouchon du réservoir de carburant.

Le frein de stationnement étant serré (Fig. 2), le bord tombé 19 libère la lame de ressort 14 qui, par son élasticité, vient en butée contre le côté 18 de la lumière 16. Si dans cette position, on veut dégager l'ouverture du réservoir de carburant, il suffit de relever le levier 8 qui reste alors dans sa position de déverrouillage par accrochage de l'arête 13 de la rampe 12 contre le bord rabattu 15 de la lame de ressort 14. On peut alors ouvrir la trappe et/ou le bouchon du réservoir.

Le plein de carburant ayant été fait, le desserrage du frein de stationnement provoque l'abaissement de la lame de ressort 16, ce qui libère le levier 8 qui reprend sa position de verrouillage.

Les avantages de cet agencement résident dans la sécurité accrue qu'il apporte ainsi que dans sa grande simplicité, de sorte que ce gain au niveau de la sécurité est réalisé pratiquement sans coût supplémentaire.

## Revendications

1. Dispositif de commande à distance d'un organe de verrouillage sur un véhicule automobile muni par ailleurs d'un organe (3) de commande de frein de stationnement, comprenant un organe d'actionnement (8) sollicité par un organe élastique (11), caractérisé en ce que ledit organe élastique (11) sollicite l'organe d'actionnement (8) dans le sens pour lequel l'organe de verrouillage est en position active et il est prévu des moyens (12 à 18) pour maintenir ledit organe d'actionnement (8) dans une position pour laquelle l'organe de verrouillage est rendu inactif, l'organe (3) de commande du frein de stationnement agissant sur lesdits moyens pour les rendre inactifs lorsqu'il n'est pas en position de serrage du frein.

2. Dispositif suivant la revendication 1, caractérisé en ce que lesdits moyens comprennent un organe élastique (14) de retenue pouvant coopérer avec une partie (13) de l'organe d'actionnement (8) et maintenu écarté de cet organe d'actionnement lorsque l'organe (3) de commande du frein de stationnement est en position desserrée.

3. Dispositif suivant la revendication 1, caractérisé en ce que l'organe d'actionnement est un levier (8) articulé sur un support (2) sur lequel est également articulé l'organe (3) de commande du frein.

4. Dispositif suivant les revendications 2 et 3, caractérisé en ce que l'organe élastique est une lame de ressort (14) fixée à une extrémité sur le support (2) et dont l'extrémité libre comporte un bord rabattu (15) pouvant s'accrocher sur une partie complémentaire (13) d'une patte formée sur l'organe d'actionnement (8).

5. Dispositif suivant la revendication 4, caractérisé en ce que la lame de ressort (14) est guidée dans une lumière (16) ménagée dans une pièce (17) portée par le support (2).

6. Dispositif suivant la revendication 4, caractérisé en ce que l'organe (3) de commande du frein comporte un rebord (19) qui repousse la lame de ressort (14) et la maintient écartée de l'organe d'actionnement, lorsque l'organe de commande (3) est en position de desserrage du frein.

7. Dispositif suivant la revendication 4, caractérisé en ce que la lame de ressort (14) est fixée sur le support (2) par un boulon (6) ou organe de fixation équivalent, qui sert également à la fixation d'un élément (5) du frein de stationnement.

8. Dispositif suivant la revendication 4, caractérisé en ce que la patte formée sur l'organe d'actionnement (8) comporte une partie (12) formant rampe pour guider la lame de ressort (14).

## Claims

1. A device for the remote control of a locking element on a motor vehicle provided with an element (3) controlling a parking brake, comprising an actuating element (8) biased by an elastically yieldable element (11), characterised in that said elastically yieldable element (11) biases the actuating element (8) in the direction in which the locking element is in an active position and means (12 to 18) are provided for maintaining said actuating element (8) in a position in which the locking element is rendered inactive, the element (3) controlling the parking brake acting on said means so as to render them inactive when it is not in its brake-applying position.

2. A device according to claim 1, characterised in that said means comprise an elastically yieldable retaining element (14) cooperative with a part (13) of the actuating element (8) and maintained spaced away from this actuating element when the element (3) controlling the parking brake is in its released position.

3. A device according to claim 1, characterised in that the actuating element is a lever (8) pivotally mounted on a support (2) on which the element (3) controlling the brake is also pivotally mounted.

4. A device according to claims 2 and 3, characterised in that the elastically yieldable element is a spring strip (14) fixed at one end to the support (2) and whose free end includes a raised edge portion (15) capable of hooking onto a complementary portion (13) of a tab formed on the actuating element (8).

5. A device according to claim 4, characterised in that the spring strip (14) is guided in an opening (16) formed in a member (17) carried by the support (2).

6. A device according to claim 4, characterised in that the element (3) controlling the brake comprises a flange (19) which exerts a force on the spring strip (14) and maintains it spaced away from the actuating element when the control element (3) is in the released brake position.

7. A device according to claim 4, characterised in that the spring strip (14) is fixed to the support (2) by a bolt (6) or like fixing means, which also serves to fix an element (5) of the parking brake.

8. A device according to claim 4, characterised in that the tab formed on the actuating element (8) has a portion (12) forming a ramp for guiding the spring strip (14).

## Patentansprüche

1. Vorrichtung zur Fernsteuerung eines Verriegelungsorgans an einem Kraftfahrzeug, das ferner mit einem Steuerorgan (3) für die Feststellbremse versehen ist, mit einem von einem elastischen Organ (11) beaufschlagten Betätigungsorgan (8), dadurch gekennzeichnet, daß das elastische Organ (11) das Betätigungsorgan (8) in der Richtung beaufschlagt, in der sich das Verriegelungsorgan in der aktiven Stellung befindet, und daß Mittel (12 bis 18) vorgesehen sind, um das Betätigungsorgan (8) in einer Stellung zu halten, in der das Verriegelungsorgan inaktiv ist, wobei das Steuerorgan (3) für die Feststellbremse auf diese Mittel einwirkt, um sie inaktiv zu machen, wenn es sich in der Klemmstellung der Bremse befindet.

2. Vorrichtung nach Anspruch 1, dadurch gekennzeichnet, daß die Mittel ein elastisches Rückhalteorgan (14) aufweisen, das mit einem Teil (13) des Betätigungsorgans (8) zusammenarbeiten und von diesem Betätigungsorgan entfernt gehalten werden kann, wenn sich das Steuerorgan (3) für die Feststellbremse in Lösestellung befindet.

3. Vorrichtung nach Anspruch 1, dadurch gekennzeichnet, daß das Betätigungsorgan ein Hebel (8) ist, der an einem Träger (2) angelenkt ist, an dem ebenfalls das Steuerorgan (3) für die Bremse angelenkt ist.

4. Vorrichtung nach Anspruch 2 und 3, dadurch gekennzeichnet, daß das elastische Organ ein Federblatt (14) ist, das mit einem Ende am Träger (2) befestigt ist und dessen freies Ende einen umgebogenen Rand (15) aufweist, der sich an einem komplementären Teil (13) einer am Betätigungsorgan (8) ausgebildeten Lasche einhängen kann.

5. Vorrichtung nach Anspruch 4, dadurch gekennzeichnet, daß das Federblatt (14) in einem Ausschnitt (16) geführt ist, der in einem vom Träger (2) getragenen Teil (17) ausgebildet ist.

6. Vorrichtung nach Anspruch 4, dadurch gekennzeichnet, daß das Steuerorgan (3) für die Bremse einen Randanschlag (19) aufweist, der das Federblatt (14) zurückdrückt und vom Betätigungsorgan entfernt hält, wenn sich das Steuerorgan (3) in der Lösestellung der Bremse befindet.

7. Vorrichtung nach Anspruch 4, dadurch gekennzeichnet, daß das Federblatt (14) am Träger durch einen Schraubenbolzen (6) oder ein gleichwertiges Befestigungselement befestigt ist, das auch zur Befestigung eines Elements (5) der Feststellbremse dient.

8. Vorrichtung nach Anspruch 4, dadurch gekennzeichnet, daß die am Betätigungsorgan (8) ausgebildete Lasche einen Teil (12) aufweist, der eine Rampe zur Führung des Federblatts (14) bildet.

FIG.1

FIG. 2